# FASCICULE DE BREVET EUROPEEN

(11) **EP 2 167 334 B1**
(45) Date de publication et mention de la délivrance du brevet: **10.11.2010**
(21) Numéro de dépôt: 08806046.2
(22) Date de dépôt: 20.06.2008
(51) Int. Cl.: B60H 1/00, B60H 3/06

(54) **SYSTEME DE CHAUFFAGE/CLIMATISATION POUR VEHICULE AUTOMOBILE ET PROCEDE DE CONTROLE ASSOCIE**
ERWÄRMUNGS-/KLIMAANLAGENSYSTEM FÜR EIN MOTORFAHRZEUG UND ENTSPRECHENDES STEUERUNGSVERFAHREN
HEATING/AIR CONDITIONING SYSTEM FOR A MOTOR VEHICLE AND ASSOCIATED METHOD OF CONTROL

(30) Priorité: 21.06.2007 FR 0755920
(43) Date de publication de la demande: 31.03.2010
(73) Titulaire: Renault S.A.S., 92100 Boulogne-Billancourt (FR)
(72) Inventeur: BOUAMRA, Kahina, F-91300 Massy (FR); MAKAROV, Maxime, F-Viroflay 78220 (FR)
(74) Mandataire: Religieux, Vincent
(86) Numéro de dépôt international: PCT/FR2008/051114
(87) Numéro de publication internationale: WO 2009/004262

(56) Documents cités:
- EP-A1- 1 435 306
- EP-A1- 1 514 710
- WO-A-03/000386
- DE-A1- 3 004 675
- DE-A1- 10 346 826

## Description

La présente invention concerne un système de chauffage/climatisation pour véhicule automobile ainsi qu'un procédé de contrôle de ce système en vue de son assainissement.

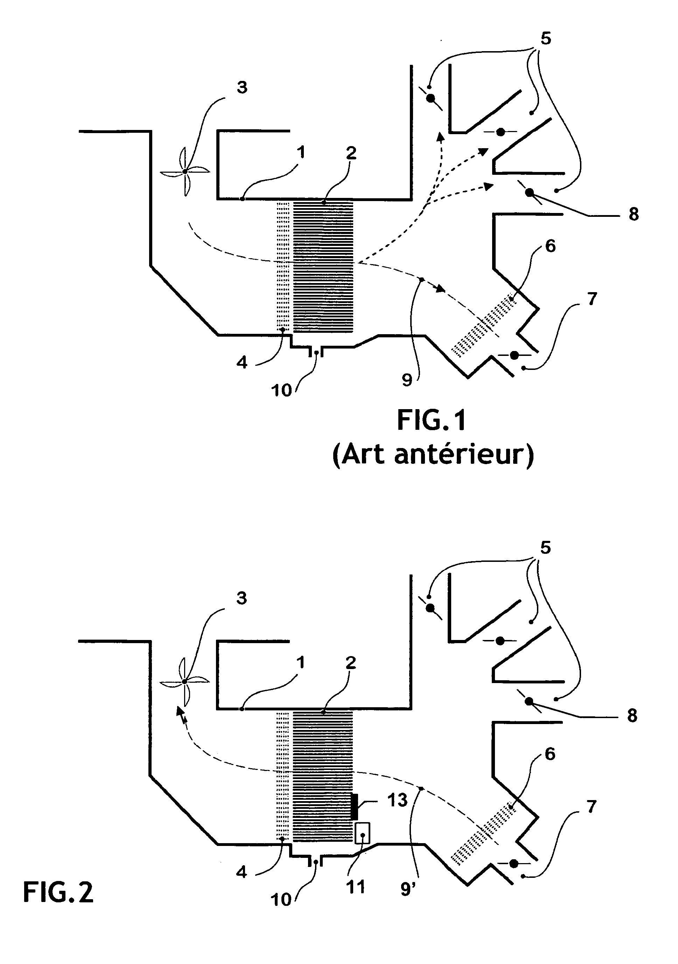

Un système connu de chauffage/climatisation est représenté sous forme schématique sur la figure 1. Un tel système comporte classiquement un boîtier 1 formant un conduit pour la circulation de l'air entre l'extérieur du véhicule et l'intérieur de l'habitacle, à l'intérieur duquel sont disposés un évaporateur 2, un pulseur d'air ou groupe moto ventilateur 3, un filtre à particules 4 combiné (par exemple à charbon actif), et un aérotherme 6. Un tel système ne peut être mis en fonctionnement qu'après la mise sous contact du véhicule automobile (position APC du bouton de démarrage). En mode de refroidissement, l'air est aspiré depuis l'extérieur du véhicule par le pulseur d'air 3, refroidi par le passage au travers de l'évaporateur 2, puis acheminé, selon les trajets représentés en pointillés vers une ou plusieurs sorties d'aération 5, débouchant ou non à l'intérieur de l'habitacle selon la position de volets de commutation 8 placés au niveau de chacune des sorties. Les condensats générés par le refroidissement de l'air sont récupérés dans une zone du boîtier 1 placée en partie basse de l'évaporateur 2, et munie d'une sortie 10 débouchant sur l'extérieur du boîtier pour permettre l'évacuation de ces condensats. En mode de chauffage, l'évaporateur 2 est désactivé, et l'air est acheminé, toujours grâce au pulseur 3, selon le trajet 9 vers une sortie d'aération 7, l'air étant chauffé par son passage au travers de l'aérotherme 6. Là encore, un volet d'obturation placé au niveau de la sortie d'aération 7 permet à l'air chauffé d'arriver ou non à l'intérieur de l'habitacle, selon sa position. Les différents modes de fonctionnement du système sont déclenchés par un module de contrôle (non représenté) comprenant un microcontrôLeur commandant la mise sous tension ou hors tension du pulseur d'air 3, de l'aérotherme 6 et/ou de l'évaporateur 2 selon le mode de fonctionnement sélectionné par l'utilisateur.

Dans les deux modes de fonctionnement, le filtre 4, placé de préférence en amont de l'évaporateur 2 en suivant le sens de circulation de l'air, sert à retenir les particules et les polluants gazeux du type COV (Composés Organiques Volatiles) qui peuvent être présents dans l'air provenant de l'extérieur du véhicule, de façon à filtrer les mauvaises odeurs avant de permettre à l'air refroidi ou chauffé de pénétrer dans l'habitacle. De tels filtres ont une durée de vie limitée et doivent être changés régulièrement.

En outre, les polluants gazeux de type COV ne sont pas les seules causes des mauvaises odeurs constatées à l'intérieur de l'habitacle. En effet, les études menées par la Demanderesse ont permis de montrer que le système de chauffage/climatisation tel que décrit précédemment est lui-même générateur de mauvaises odeurs, en raison principalement de l'humidité résiduelle responsable du dépôt et de la prolifération de micro-organismes sur l'évaporateur, et tout particulièrement dans sa partie basse ainsi qu'au niveau de la zone d'évacuation des condensats. Les filtres simples ou combinés n'ont aucune action sur ces micro-organismes.

Outre les filtres à adsorbant, tel que le charbon actif, il est également connu d'utiliser un générateur de plasma froid associé à un catalyseur pour le traitement des mauvaises odeurs de l'air circulant dans un système de chauffage/climatisation en fonctionnement. Le document EP 1 514 710 notamment décrit un tel système de chauffage/climatisation dans lequel le générateur de plasma est placé en amont de l'évaporateur dans le sens de circulation de l'air depuis l'extérieur du véhicule vers l'intérieur de l'habitacle, et le catalyseur est placé à l'intérieur de l'évaporateur ou en aval de ce dernier.

Un tel système présente un certain nombre d'inconvénients limitant son efficacité, et liés principalement au fait que ce système préconise le traitement de l'air et des micro-organismes pendant le fonctionnement même du système en mode de refroidissement ou de chauffage. Or, les micro-organismes déposés sur l'évaporateur montrent une résistance plus importante à basse température. Le traitement de l'évaporateur alors que ce dernier est à des températures basses (typiquement de l'ordre de 0° C) est sans effet sur les micro-organismes. De plus, un générateur de plasma génère également des sous-produits toxiques (O₃ ...) qui vont dans ce cas précis être introduits dans l'habitacle en même temps que l'air chauffé ou refroidi, et ce, alors même qu'il y a au moins une personne présente dans l'habitacle. Pour éviter les risques au niveau des personnes, le générateur de plasma devrait être couplé à un dispositif supplémentaire pour filtrer les produits toxiques.

La présente invention a pour but de proposer un système de chauffage/climatisation intégrant le traitement des mauvaises odeurs et d'assainissement de l'évaporateur de manière fiable et efficace, sans risque pour la santé.

Ce but est atteint selon l'invention qui propose un système de chauffage/climatisation pour véhicule automobile, comportant un boîtier formant un conduit pour la circulation de l'air entre l'extérieur du véhicule et une pluralité d'ouvertures d'aération débouchant à l'intérieur de l'habitacle, à l'intérieur duquel sont disposés au moins un pulseur d'air, un évaporateur, un générateur de plasma placé à proximité de l'évaporateur, le système comportant en outre un module de contrôle apte à déclencher le fonctionnement du pulseur d'air et de l'évaporateur lorsque le système est dans un premier mode dit de refroidissement pour permettre de refroidir l'air s'écoulant dans le conduit depuis l'extérieur vers l'intérieur de l'habitacle, **caractérisé en ce qu**'il comporte en outre un moyen de mesure de la température de l'évaporateur, situé à proximité du générateur de plasma et apte à délivrer une valeur de température mesurée au module de contrôle, et en ce que le module de contrôle est apte à initialiser, lorsque le véhicule automobile n'est plus sous contact, un mode de fonctionnement dit d'assainissement du système, dans lequel le module de contrôle commande ledit pulseur d'air pour permettre un écoulement de l'air dans ledit conduit depuis l'intérieur de l'habitacle vers l'extérieur du véhicule, et déclenche le fonctionnement du générateur de plasma pendant une durée limitée dès que la température mesurée atteint une valeur de consigne prédéfinie.

Ainsi, la présente invention propose non seulement d'effectuer un assainissement du système, notamment de l'évaporateur, en dehors des modes de fonctionnement classiques (climatisation ou chauffage) du système, c'est-à-dire à un moment où il n'y a normalement personne à l'intérieur de l'habitacle, mais de plus, d'utiliser l'air de l'habitacle pour réchauffer si besoin l'évaporateur et l'amener à une température pour laquelle le traitement antibactérien par plasma aura toute son efficacité.

La présente invention a également pour objet un procédé de contrôle d'un système de chauffage/climatisation pour véhicule automobile, du comportant un boîtier formant un conduit pour la circulation de l'air entre l'extérieur du véhicule et une pluralité d'ouvertures d'aération débouchant à l'intérieur de l'habitacle, à l'intérieur duquel sont disposés au moins un pulseur d'air, un évaporateur, un générateur de plasma placé à proximité de l'évaporateur, le système comportant en outre un module de contrôle apte à déclencher le fonctionnement du pulseur d'air et de l'évaporateur lorsque le système est dans un premier mode dit de refroidissement pour permettre de refroidir l'air s'écoulant dans le conduit depuis l'extérieur vers l'intérieur de l'habitacle, le procédé étant **caractérisé en ce qu**'il contrôle, via le module de contrôle, le fonctionnement du système en un mode dit d'assainissement selon les étapes suivantes :
- détection de la mise hors contact du véhicule automobile ;
- commande dudit pulseur d'air (3) pour permettre un écoulement (9') de l'air dans ledit conduit depuis l'intérieur de l'habitacle vers l'extérieur du véhicule ;
- mesure de la température de l'évaporateur (2) et déclenchement du fonctionnement du générateur de plasma (11) pendant une durée limitée dès que la température mesurée atteint une valeur de consigne prédéfinie.

D'autres caractéristiques, qui seront décrites dans la suite, peuvent être avantageusement ajoutées au système selon l'invention pour notamment réduire la consommation électrique du système pendant son fonctionnement en mode d'assainissement, et/ou pour renforcer la sécurité sanitaire.

Les différents aspects de l'invention et les avantages qu'elle procure seront mieux compris au vu de la description suivante faite en référence aux figures annexées, dans lesquelles :
- la figure 1, déjà décrite, illustre sous forme schématique un système de chauffage/climatisation standard ;
- la figure 2, illustre sous forme également schématique, un système de chauffage/climatisation préféré conforme à la présente invention, vu en coupe, dans son fonctionnement en mode d'assainissement ;
- la figure 3 représente une première forme de réalisation possible d'un générateur de plasma pour un système de chauffage/climatisation, et son schéma de contrôle par le module de contrôle conformément à l'invention ;
- la figure 4 représente une deuxième forme de réalisation possible d'un générateur de plasma pour un système de chauffage/climatisation conforme à l'invention.

Pour simplifier la compréhension, les éléments communs aux différentes figures portent les mêmes références.

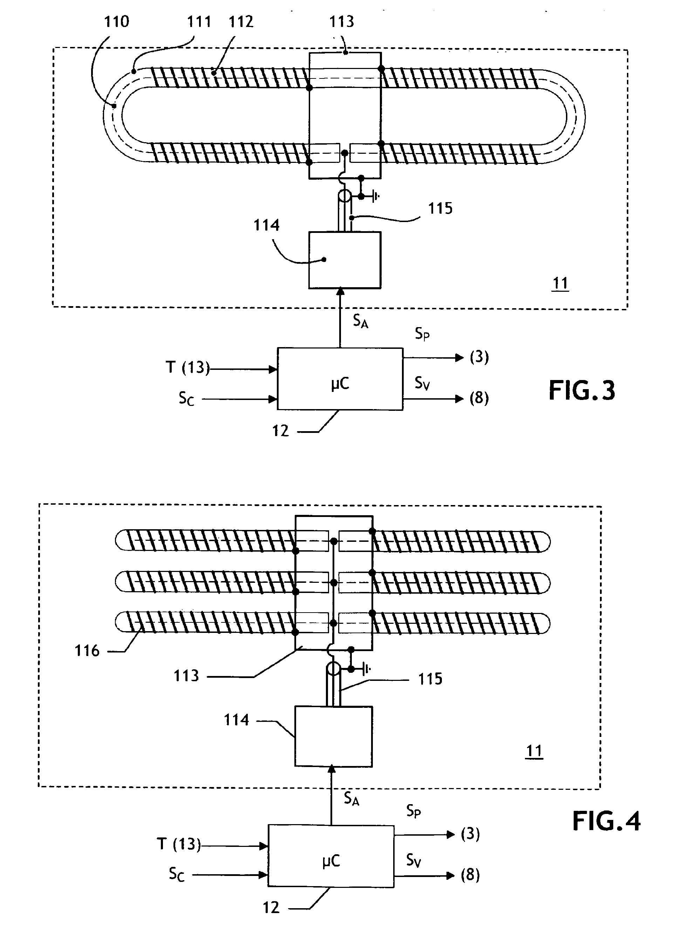

Sur la figure 2, qui illustre schématiquement un système selon un mode de réalisation préféré de l'invention, on retrouve les éléments d'un système de chauffage/climatisation standard tel que celui représenté sur la figure 1. Ainsi, le système selon l'invention comporte classiquement un boîtier 1 qui forme un conduit pour la circulation de l'air entre l'extérieur du véhicule et une pluralité d'ouvertures d'aération 5, 7 débouchant à l'intérieur de l'habitacle. Pour permettre le fonctionnement du système selon au moins un premier mode de refroidissement, le système comporte en outre, disposés à l'intérieur du boîtier 1, un pulseur d'air 3 et un évaporateur 2. Le système dispose également d'un module de contrôle 12 (voir figures 3 et 4), qui, pour le fonctionnement classique du système en mode de refroidissement, est apte à déclencher le pulseur d'air 3 et l'évaporateur 2 de façon à permettre d'une part, la création d'une circulation d'air s'écoulant dans le conduit depuis l'extérieur vers l'intérieur de l'habitacle, et d'autre part, le refroidissement de cet air avant qu'il ne pénètre dans l'habitacle.

Le système peut comporter en outre, à l'intérieur du boîtier 1, un aérotherme 6 dont le fonctionnement est également déclenché par le module de contrôle 12 lorsque le système est dans un deuxième mode de fonctionnement classique de chauffage, pour chauffer l'air dans le conduit avant qu'il ne pénètre dans l'habitacle.

Selon l'invention, le système comporte également un générateur de plasma 11 placé à proximité de l'évaporateur 2, ainsi qu'un moyen 13 de mesure de la température (de type thermocouple) de l'évaporateur 2, situé à proximité du générateur de plasma 11 et apte à délivrer une valeur T de température mesurée au module de contrôle 12.

Le module de contrôle 12 est en outre apte à initialiser, sur réception d'un signal de commande S_{C} (voir figures 3 et 4), généré lorsque le véhicule automobile n'est plus sous contact, un mode de fonctionnement dit d'assainissement du système. Dans ce mode de fonctionnement particulier, le module de contrôle 12 va générer un signal S_{P} (figures 3 et 4) de commande du pulseur d'air 3 de façon à permettre un écoulement de l'air dans le conduit depuis l'intérieur de l'habitacle vers l'extérieur du véhicule, selon le trajet 9' représenté sur la figure 2. Cela peut être réalisé par exemple en prévoyant que le moteur du pulseur d'air 3 puisse être entraîné en rotation inverse par rapport à la rotation utilisée en mode de refroidissement et/ou de chauffage. Cela peut être également réalisé à l'aide d'un petit propulseur supplémentaire qui permet d'inverser le flux d'air. Grâce à cette circulation d'air, la surface de l'évaporateur 2 va être réchauffée par l'air en provenance de l'habitacle, lequel est à température ambiante (typiquement entre 18° et 22°C). Le module de contrôle 12 va utiliser la valeur T de température mesurée par le moyen de mesure 13 pour la comparer avec une valeur de consigne prédéfinie, par exemple fixée à 10° C, et déclencher le fonctionnement du générateur de plasma 11 dès que la température mesurée atteint cette valeur de consigne prédéfinie. Le signal de déclenchement du générateur de plasma est désigné par la référence SA sur les figures 3 et 4 qui seront décrites ultérieurement.

Le temps mis par l'évaporateur 2 pour atteindre la température de consigne dépend des conditions d'utilisation du système avant que le véhicule automobile ne soit mis hors contact. Si le système n'était pas en fonctionnement, ou si le système fonctionnait selon le mode de chauffage, la température à la surface de l'évaporateur 2 est déjà à une valeur supérieure à la valeur de consigne, et le générateur de plasma 2 peut être immédiatement activé. En revanche, si le système venait juste d'être utilisé en mode de refroidissement, il peut être nécessaire d'attendre avant que la température de la surface de l'évaporateur 2 n'atteigne la valeur de consigne.

Il est possible de réduire le temps mis par l'évaporateur 2 pour atteindre la température de consigne en utilisant l'aérotherme 6 généralement présent dans le boîtier du système pour permettre son fonctionnement en mode chauffage. On peut ainsi prévoir que le fonctionnement de l'aérotherme 6 soit également déclenché par le module de contrôle 12 lorsque le système est dans ledit mode d'assainissement, pour chauffer l'air provenant de l'habitacle.

Le générateur de plasma 11 utilisé est de préférence du type à Décharge à Barrière Diélectrique. La durée de fonctionnement du générateur de plasma 11 pendant le mode d'assainissement est limitée avantageusement à une minute. Des radicaux libres et une petite quantité d'ozone et d'oxyde d'azote sont ainsi produits par plasma.

Dans un mode de réalisation préféré, le générateur de plasma 11 s'étend dans un plan parallèle au plan de l'évaporateur 2, de façon à être en regard d'au moins toute la partie basse de l'évaporateur, si possible également à proximité immédiate d'une zone du boîtier située en dessous de l'évaporateur et munie d'une sortie 10 pour l'évacuation des condensats. Les particules actives générées par plasma vont ainsi se fixer avec l'humidité condensée dans la partie basse de l'évaporateur et dans la zone d'évacuation, en formant un milieu légèrement acide qui est néfaste pour des bactéries occupant cette partie du système. Cette configuration permet ainsi d'assainir les zones les plus exposées à la prolifération des bactéries.

A noter par ailleurs que d'autres composantes du système se trouvant dans le voisinage, notamment le filtre à particules 4, vont également être assainies, ce qui permet avantageusement d'augmenter leur durée de vie.

Pour éviter des surconsommations inutiles d'énergie sur la batterie du véhicule, on évitera de préférence de faire fonctionner le pulseur d'air 3 pendant toute la durée du cycle d'assainissement. On peut notamment prévoir que le module de contrôle 12 commandera le fonctionnement du pulseur d'air 3 au moins jusqu'à ce que la température mesurée par le moyen de mesure 13 atteigne la valeur de consigne prédéfinie.

Dans le cas où l'on utilise l'aérotherme 6 pour réchauffer plus rapidement l'évaporateur 2, on peut également prévoir de limiter le fonctionnement de l'aérotherme 6 jusqu'à l'obtention de la valeur de consigne.

Comme cela a été indiqué précédemment, le mode d'assainissement n'est déclenché que si une mise hors contact du véhicule automobile a été détectée au préalable, ce qui correspond normalement à une situation dans laquelle il n'y a plus personne dans l'habitacle. On peut néanmoins renforcer encore la sécurité en prévoyant de coupler le système à d'autres systèmes ou dispositifs qui peuvent déjà être présents à d'autres fins sur le véhicule.

Notamment, il est possible de prévoir que le mode d'assainissement ne puisse être initié tant qu'une condamnation centralisée des ouvrants du véhicule n'a pas été détectée.

En variante ou en complément, le module de contrôle 12 peut être adapté pour recevoir un signal d'un dispositif de détection de présence d'un être vivant à l'intérieur de l'habitacle, et pour empêcher le fonctionnement du générateur de plasma 11, voire du mode d'assainissement, en cas de détection de présence d'un être vivant.

En variante ou en complément, le module de contrôle 12 pourrait commander automatiquement la fermeture de volets d'obturation 8 disposés au niveau des ouvertures d'aération 5, 7 au moins pendant la durée de fonctionnement du générateur de plasma 11 (voir signal de commande S_{V} sur les figures 3 et 4).

En variante, on pourrait envisager que le système entre automatiquement en mode d'assainissement au bout d'un certain temps après commande manuelle par l'utilisateur du véhicule.

Deux modes de réalisation possibles, d'un générateur de plasma froid de type DBD (Décharge à Barrière Electrique) vont à présent être décrits en référence aux figures 3 et 4. On rappelle qu'une Décharge à Barrière Diélectrique est obtenue en appliquant un signal de haute tension, de type impulsionnel ou sinusoïdal, aux bornes de deux électrodes faiblement espacées, dont l'une est recouverte d'un matériaux diélectrique.

Sur la figure 3, l'électrode interne du générateur de plasma 11 se compose d'un fil conducteur 110 enroulé selon une spire de forme oblongue, et revêtu d'une gaine 111 en matériau diélectrique, et l'électrode externe est réalisée par un fil ou ressort métallique 112 relié à la masse et enroulé sur la longueur de la gaine. L'ensemble ainsi constitué présente une portion intermédiaire enfermée dans une boîte de connexion 113. L'électrode interne 110 est reliée au niveau de la boîte de connexion 113 à une alimentation haute tension 114 soit directement, soit, comme illustré, via un câble coaxial 115.

Sur la figure 4, l'ensemble constitué par la spire de forme oblongue et le ressort de la figure 3 a été remplacé par des tubes 116 s'étendant parallèlement de part et d'autre de la boîte de connexion 113, chacun des tubes renfermant une électrode interne connectée à l'alimentation haute tension 114, soit directement, soit via le câble coaxial, et étant entouré du ressort formant électrode externe reliée à la masse. Il est également possible de n'utiliser qu'une partie (droite ou gauche des figures 3, 4) des tubes 116. Dans ce cas la boîte de connexion 113 est située sur le côté du dispositif. Il est aussi envisageable d'utiliser un seul tube qui couvre la partie basse de l'évaporateur et qui s'étend d'une extrémité à l'autre.

Dans les deux cas, l'alimentation à haute tension délivre des tensions comprises typiquement entre 5 et 10 kV, sous forme de signaux unipolaires ou bipolaires, impulsionnels ou sinusoïdaux.

Pour les deux figures 3 et 4, on a représenté en outre le contrôle du générateur de plasma 11 par le module de contrôle 12 comprenant un microcontrôleur.

On voit qu'il est donc possible de réaliser des générateurs de plasma à très faible encombrement, notamment en épaisseur. Dans le cas de la figure 3, on dimensionnera la spire de forme oblongue de façon à ce que sa longueur corresponde sensiblement à la longueur de la partie basse de l'évaporateur 2, et la boîte de connexion sera sensiblement centrée par rapport à la surface de la partie basse à traiter de l'évaporateur 2. Dans le cas de la figure 4, la boîte de connexion sera également centrée par rapport à la surface de la partie basse à traiter de l'évaporateur 2, et la longueur de chaque tube correspondra sensiblement à la moitié la longueur de la partie basse de l'évaporateur 2. Ce mode de réalisation offre plus de liberté sur la hauteur de la zone en partie basse. En effet, si l'on souhaite traiter une zone de l'évaporateur plus étendue que la partie basse, il suffit de prévoir un nombre plus important de tubes 116.

Dans un des modes de fonctionnement de l'invention, quand une partie des tubes est utilisée, la boîte 113 et l'alimentation électrique 114 peuvent être placés sur le côté des tubes. Ce mode de réalisation permet de réduire le volume du dispositif.

## Revendications

1. Système de chauffage/climatisation pour véhicule automobile, comportant un boîtier (1) formant un conduit pour la circulation de l'air entre l'extérieur du véhicule et une pluralité d'ouvertures d'aération (5, 7) débouchant à l'intérieur de l'habitacle, à l'intérieur duquel sont disposés au moins un pulseur d'air (3), un évaporateur (2), un générateur de plasma (11) placé à proximité de l'évaporateur, le système comportant en outre un module de contrôle (12) apte à déclencher le fonctionnement du pulseur d'air (3) et de l'évaporateur (2) lorsque le système est dans un premier mode dit de refroidissement pour permettre de refroidir l'air s'écoulant dans le conduit depuis l'extérieur vers l'intérieur de l'habitacle, **caractérisé en ce qu'**il comporte en outre un moyen (13) de mesure de la température de l'évaporateur (2), situé à proximité du générateur de plasma (11) et apte à délivrer une valeur de température mesurée au module de contrôle (12), et **en ce que** le module de contrôle (12) est apte à initialiser, lorsque le véhicule automobile n'est plus sous contact, un mode de fonctionnement dit d'assainissement du système, dans lequel le module de contrôle (12) commande ledit pulseur d'air (3) pour permettre un écoulement (9') de l'air dans ledit conduit depuis l'intérieur de l'habitacle vers l'extérieur du véhicule, et déclenche le fonctionnement du générateur de plasma (11) pendant une durée limitée dès que la température mesurée atteint une valeur de consigne prédéfinie.

2. Système de chauffage/climatisation selon la revendication 1, **caractérisé en ce que** le générateur de plasma (11) s'étend dans un plan parallèle au plan de l'évaporateur (2), de façon à être en regard d'au moins la partie basse de l'évaporateur (2).

3. Système de chauffage/climatisation selon l'une quelconque des revendications précédentes, **caractérisé en ce que** le générateur de plasma (11) est situé à proximité immédiate d'une zone du boîtier (1) située en dessous de l'évaporateur (2) et munie d'une sortie (10) pour l'évacuation des condensats.

4. Système de chauffage/climatisation selon l'une quelconque des revendications précédentes, **caractérisé en ce que** ladite valeur de consigne est de l'ordre de 10° C.

5. Système de chauffage/climatisation selon l'une quelconque des revendications précédentes, **caractérisé en ce que** le module de contrôle (12) commande le fonctionnement du pulseur d'air (3) dans le mode d'assainissement au moins jusqu'à ce que la température mesurée atteigne ladite valeur de consigne prédéfinie.

6. Système de chauffage/climatisation selon l'une quelconque des revendications précédentes, **caractérisé en ce que** la durée de fonctionnement du générateur de plasma (11) pendant le mode d'assainissement est limitée à une minute.

7. Système de chauffage/climatisation selon l'une quelconque des revendications précédentes, **caractérisé en ce qu'**il comporte en outre, à l'intérieur du boîtier (1), un aérotherme (6) dont le fonctionnement est déclenché par le module de contrôle (12) lorsque le système est soit dans un deuxième mode de fonctionnement dit de chauffage, pour chauffer l'air dans le conduit avant qu'il ne pénètre dans l'habitacle, soit dans ledit mode d'assainissement, pour chauffer l'air provenant de l'habitacle et permettre à l'évaporateur (2) d'atteindre plus rapidement ladite valeur de consigne.

8. Système de chauffage/climatisation selon l'une quelconque des revendications précédentes, **caractérisé en ce que** le module de contrôle (12) est adapté pour recevoir un signal d'un dispositif de détection de présence d'un être vivant à l'intérieur de l'habitacle, et pour empêcher le fonctionnement du générateur de plasma (11), voire du mode d'assainissement, en cas de détection de présence d'un être vivant.

9. Système de chauffage/climatisation selon l'une quelconque des revendications précédentes, **caractérisé en ce que** le module de contrôle (12) est apte à commander automatiquement la fermeture de volets d'obturation (8) disposés au niveau des ouvertures d'aération (5, 7) au moins pendant la durée de fonctionnement du générateur de plasma (11 ).

10. Système de chauffage/climatisation selon l'une quelconque des revendications précédentes, **caractérisé en ce que** le générateur de plasma (11) est du type à Décharge à Barrière Diélectrique.

11. Procédé de contrôle d'un système de chauffage/climatisation pour véhicule automobile, du comportant un boîtier (1) formant un conduit pour la circulation de l'air entre l'extérieur du véhicule et une pluralité d'ouvertures d'aération (5, 7) débouchant à l'intérieur de l'habitacle, à l'intérieur duquel sont disposés au moins un pulseur d'air (3), un évaporateur (2), un générateur de plasma (11) placé à proximité de l'évaporateur, le système comportant en outre un module de contrôle (12) apte à déclencher le fonctionnement du pulseur d'air (3) et de l'évaporateur (2) lorsque le système est dans un premier mode dit de refroidissement pour permettre de refroidir l'air s'écoulant dans le conduit depuis l'extérieur vers l'intérieur de l'habitacle, le procédé étant **caractérisé en ce qu'**il contrôle, via le module de contrôle (12) le fonctionnement du système en un mode dit d'assainissement selon les étapes suivantes :
- détection de la mise hors contact du véhicule automobile ;
- commande dudit pulseur d'air (3) pour permettre un écoulement (9') de l'air dans ledit conduit depuis l'intérieur de l'habitacle vers l'extérieur du véhicule ;
- mesure de la température de l'évaporateur (2) et déclenchement du fonctionnement du générateur de plasma (11) pendant une durée limitée dès que la température mesurée atteint une valeur de consigne prédéfinie.

## Claims

1. Heating/air-conditioning system for a motor vehicle, comprising a unit (1) forming a duct along which air can circulate between the outside of the vehicle and a plurality of ventilation openings (5, 7) opening into the cabin interior, in which there are: at least one air blower (3), an evaporator (2), a plasma generator (11) positioned close to the evaporator, the system further comprises a control module (12) able to switch on the air blower (3) and the evaporator (2) when the system is in a first mode known as a cooling mode, to allow the air flowing along the duct from the outside to the cabin interior to be cooled, **characterized in that** it further comprises a means (13) of measuring the temperature of the evaporator (2), situated near the plasma generator (11), and able to deliver a measured-temperature value to the control module (12), and **in that** the control module (12) is able, when the motor vehicle ignition is no longer switched on, to initialize a mode of operation known as system purification mode, in which the control module (12) operates the said air blower (3) to allow a flow (9') of the air through the said duct from the cabin interior to outside the vehicle, and initiates operation of the plasma generator (11) for a limited length of time once the measured temperature reaches a preset datum value.

2. Heating/air-conditioning system according to Claim 1, **characterized in that** the plasma generator (11) runs in a plane parallel to the plane of the evaporator (2), so that it faces at least the lower part of the evaporator (2).

3. Heating/air-conditioning system according to either one of the preceding claims, **characterized in that** the plasma generator (11) is situated in the immediate vicinity of a region of the unit (1) that is situated below the evaporator (2) and equipped with an outlet (10) for discharging condensate.

4. Heating/air-conditioning system according to any one of the preceding claims, **characterized in that** the said datum value is of the order of 10°C.

5. Heating/air-conditioning system according to any one of the preceding claims, **characterized in that** the control module (12) operates the air blower (3) in the purification mode at least until the measured temperature reaches the said preset datum value.

6. Heating/air-conditioning system according to any one of the preceding claims, **characterized in that** the duration for which the plasma generator (11) is operated in purification mode is limited to one minute.

7. Heating/air-conditioning system according to any one of the preceding claims, **characterized in that** it further comprises, inside the unit (1), a unit heater (6), the operation of which is initiated by the control module (12) when the system is either in a second mode of operation known as heating mode, for heating the air in the duct before it enters the cabin or in the said purification mode, to heat the air coming from the cabin and allow the evaporator (2) to reach the said datum value more rapidly.

8. Heating/air-conditioning system according to any one of the preceding claims, **characterized in that** the control module (12) is designed to receive a signal from a device that detects the presence of a living being in the cabin interior and to prevent the plasma generator (11), or even the purification mode, from functioning if the presence of a living being is detected.

9. Heating/air-conditioning system according to any one of the preceding claims, **characterized in that** the control module (12) is able automatically to close the shutters (8) on the ventilation openings (5, 7) at least for the time that the plasma generator (11) is operating.

10. Heating/air-conditioning system according to any one of the preceding claims, **characterized in that** the plasma generator (11) is of the Dielectric Barrier Discharge type.

11. Method for controlling a heating/air-conditioning system for a motor vehicle, of the type comprising a unit (1) forming a duct along which air can circulate between the outside of the vehicle and a plurality of ventilation openings (5, 7) opening into the cabin interior, in which there are: at least one air blower (3), an evaporator (2), a plasma generator (11) positioned close to the evaporator, the system further comprises a control module (12) able to switch on the air blower (3) and the evaporator (2) when the system is in a first mode known as a cooling mode, to allow the air flowing along the duct from the outside to the cabin interior to be cooled, the method being **characterized in that** it controls, via the control module (12), the operation of the system in a mode known as purification mode, with the following steps:
- detection that the motor vehicle ignition has been switched off;
- operating the said air blower (3) to allow a flow (9') of air along the said duct from the cabin interior to the outside of the vehicle;
- measuring the temperature of the evaporator (2) and switching on the plasma generator (11) for a limited duration once the measured temperature reaches a preset datum value.

## Patentansprüche

1. Heizungs-/Klimatisierungssystem für Kraftfahrzeug, mit einem Gehäuse (1), das eine Leitung bildet für die Zirkulation von Luft zwischen der äußeren Umgebung des Fahrzeugs und mehreren Belüftungsöffnungen (5, 7), die in den Fahrgastraum münden, in der wenigstens ein Luftpulsierer (3), ein Verdampfer (2) und in der Nähe des Verdampfers ein Plasmagenerator (11) angeordnet sind, wobei das System außerdem ein Steuermodul (12) enthält, das den Betrieb des Luftpulsierers (3) und des Verdampfers (2) starten kann, wenn das System in einer ersten so genannten Kühlungsbetriebsart ist, um die Kühlung der Luft, die in der Leitung von der äußeren Umgebung in den Innenraum der Fahrgastzelle strömt, zu ermöglichen, **dadurch gekennzeichnet, dass** es außerdem ein Mittel (13) zum Messen der Temperatur des Verdampfers (2) enthält, das sich in der Nähe des Plasmagenerators (11) befindet und einen Wert der gemessenen Temperatur zu dem Steuermodul (12) liefern kann, **und dass** das Steuermodul (12) dann, wenn das Kraftfahrzeug nicht mehr eingeschaltet ist, eine so genannte Spülungsbetriebsart für das System beginnen kann, in der das Steuermodul (12) dem Luftpulsierer (3) befiehlt, eine Strömung (9') von Luft in der Leitung von dem Innenraum des Fahrgastraums in die äußere Umgebung des Fahrzeugs zuzulassen, und den Betrieb des Plasmagenerators (11) für eine begrenzte Dauer auslöst, sobald die gemessene Temperatur einen im Voraus definierten Sollwert erreicht.

2. Heizungs-/Klimatisierungssystem nach Anspruch 1, **dadurch gekennzeichnet, dass** sich der Plasmagenerator (11) in einer Ebene parallel zur Ebene des Verdampfers (2) erstreckt, derart, dass er sich wenigstens gegenüber einem unteren Teil des Verdampfers (2) befindet.

3. Heizungs-/Klimatisierungssystem nach einem der vorhergehenden Ansprüche, **dadurch gekennzeichnet, dass** sich der Plasmagenerator (11) in unmittelbarer Nähe einer Zone des Gehäuses (1) befindet, die sich unter dem Verdampfer (2) befindet und mit einem Ausgang (10) für die Abführung der Kondensate versehen ist.

4. Heizungs-/Klimatisierungssystem nach einem der vorhergehenden Ansprüche, **dadurch gekennzeichnet, dass** der Sollwert in der Größenordnung von 10 °C liegt.

5. Heizungs-/Klimatisierungssystem nach einem der vorhergehenden Ansprüche, **dadurch gekennzeichnet, dass** das Steuermodul (12) den Betrieb des Luftpulsierers (3) in der Spülungsbetriebsart wenigstens solange befiehlt, bis die gemessene Temperatur den im Voraus definierten Sollwert erreicht.

6. Heizungs-/Klimatisierungssystem nach einem der vorhergehenden Ansprüche, **dadurch gekennzeichnet, dass** die Dauer des Betriebs des Plasmagenerators (11) während der Spülungsbetriebsart auf eine Minute begrenzt ist.

7. Heizungs-/Klimatisierungssystem nach einem der vorhergehenden Ansprüche, **dadurch gekennzeichnet, dass** es außerdem in dem Gehäuse (1) einen Thermoblock (6) enthält, dessen Betrieb durch das Steuermodul (12) gestartet wird, wenn das System entweder in einer zweiten so genannten Heizbetriebsart ist, um die Luft in der Leitung zu erwärmen, bevor sie in den Fahrgastraum eintritt, oder in der Spülungsbetriebsart ist, um die vom Fahrgastraum kommende Luft zu erwärmen und zu ermöglichen, dass der Verdampfer (2) schneller den Sollwert erreicht.

8. Heizungs-/Klimatisierungssystem nach einem der vorhergehenden Ansprüche, **dadurch gekennzeichnet, dass** das Steuermodul (12) dazu ausgelegt ist, ein Signal einer Vorrichtung für die Detektion des Vorhandenseins eines Lebewesens in dem Fahrgastraum zu empfangen und den Betrieb des Plasmagenerators (11) und sogar der Spülungsbetriebsart in dem Fall, in dem das Vorhandensein eines Lebewesens detektiert wird, zu verhindern.

9. Heizungs-/Klimatisierungssystem nach einem der vorhergehenden Ansprüche, **dadurch gekennzeichnet, dass** das Steuermodul (12) das Schließen von Verschlussklappen (8), die sich auf Höhe der Belüftungsöffnungen (5, 7) befinden, wenigstens während der Betriebsdauer des Plasmagenerators (11) automatisch befehlen kann.

10. Heizungs-/Klimatisierungssystem nach einem der vorhergehenden Ansprüche, **dadurch gekennzeichnet, dass** der Plasmagenerator (11) vom Typ mit Entladung mit dielektrischer Sperre ist.

11. Verfahren zum Steuern eines Heizungs-/Klimatisierungssystems für Kraftfahrzeug, das ein Gehäuse (1) enthält, das eine Leitung bildet für die Zirkulation von Luft zwischen der äußeren Umgebung des Fahrzeugs und mehreren Belüftungsöffnungen (5, 7), die in den Fahrgastraum münden, in der wenigstens ein Luftpulsierer (3), ein Verdampfer (2) und in der Nähe des Verdampfers ein Plasmagenerator (11) angeordnet sind, wobei das System außerdem ein Steuermodul (12) enthält, das den Betrieb des Luftpulsierers (3) und des Verdampfers (2) beginnen kann, wenn das System in einer ersten so genannten Kühlungsbetriebsart ist, um eine Kühlung der Luft, die in der Leitung von der äußeren Umgebung in den Innenraum des Fahrgastraums strömt, zu ermöglichen, wobei das Verfahren **dadurch gekennzeichnet ist, dass** es über das Steuermodul (12) den Betrieb des Systems in einer so genannten Spülungsbetriebsart steuert, die die folgenden Schritte enthält:
- Detektieren des Ausschaltens des Kraftfahrzeugs;
- Steuern des Luftpulsierers (3), um eine Strömung (9') von Luft in der Leitung von dem Innenraum des Fahrgastraums in die äußere Umgebung des Fahrzeugs zuzulassen;
- Messen der Temperatur des Verdampfers (2) und Beginnen des Betriebs des Plasmagenerators (11) während einer begrenzten Dauer, sobald die gemessene Temperatur einen im Voraus definierten Sollwert erreicht.
